# EUROPEAN PATENT SPECIFICATION

(11) **EP 0 808 433 B1**
(45) Date of publication and mention of the grant of the patent: **09.04.2003**
(21) Application number: 95922116.9
(22) Date of filing: 30.05.1995
(51) Int. Cl.: F16J 15/447

(54) **SEAL DEVICE**
ABDICHTUNGSRING
DISPOSITIF D'ETANCHEITE

(30) Priority: 31.05.1994 US 251268
(43) Date of publication of application: 26.11.1997
(73) Proprietor: JM CLIPPER CORPORATION, Nacogdoches, TX 75963-2340 (US)
(72) Inventor: MERKIN, Robert, A., Nacogdoches, TX 75961 (US); FEDOROVICH, George, Nacogdoches, TX 75961 (US); SHARRER, Kenneth, J., Waterloo, NY 13165 (US)
(74) Representative: Powell, Timothy John
(86) International application number: US9506667
(87) International publication number: WO95033941

(56) References cited:
- US-A- 2 995 390
- US-A- 4 114 902
- US-A- 4 576 383
- US-A- 4 848 937
- US-A- 4 852 890
- US-A- 5 024 451
- US-A- 5 290 047
- US-A- 5 299 349
- US-A- 5 316 317

## Description

### BACKGROUND OF THE INVENTION

The present invention relates to a device for providing a seal between a shaft and a housing. In particular, the present invention relates to a dynamic seal device for preventing lubricant from leaking out of a housing and/or for preventing contaminants from traveling into the housing.

Prior art devices for sealing a rotating shaft are disclosed in U.S. Patents Nos. 4,022,479 (Orlowski) and 5,024,451 (Borowski). Seal devices of this type may be used to prevent lubricant from escaping out of a bearing housing and/or to prevent contaminants from working their way into the housing. The prior art devices are formed of at least two ring-shaped members that rotate with respect to each other when the shaft is rotated. one of the members is fixed to the housing and does not rotate. The other member rotates with the rotating shaft.

The two ring members should be located very close together, particularly when the seal device is used to isolate the bearing from small particulate contaminants. Even small quantities of such contaminants are capable of significantly deteriorating the bearing. To prevent such contamination, the two relatively rotatable ring members must be held together very closely, with only a very narrow space therebetween.

The ring members of the Orlowski seal device are connected together by a separate securing means, not shown in the prior art patent. The ring members themselves have no means for establishing and maintaining a narrow spacing therebetween. Therefore, the prior art seal device cannot be manufactured as a unit with a preset, fixed spacing. The spacing between the ring members has to be set when the seal device is installed into the housing. This leaves room for human error outside the control of the device manufacturer. In particular, the Orlowski device can be improperly installed, with the ring members located too far apart to perform satisfactorily. Another problem with the Orlowski device is that the ring members may be separated subsequent to installation, for example by high pressure cleaning spray.

The ring members of the Borowski device are held together by a bead and a groove provided on the ring members themselves. The bead fits within the groove with an interference fit. This arrangement is an improvement over the Orlowski system in the sense that no separate securing means is needed. But the Borowski device is still unsatisfactory because the bead must be resiliently deformed to be positioned within the groove, and the groove must be correspondingly enlarged to receive the deformed bead. The deformation of the bead during assembly makes it difficult to achieve the desired close positioning between the two ring members, as explained in more detail below.

US Patent No. 5,316,317 discloses a system for providing a seal between a housing and a shaft. The system is formed of at least two ring members connected to each other by relative diametrical expansion with reduced or eliminated axial resilient deformation. The ring members may be held together by an annular protrusion located within a recess. To eliminate play between the protrusion and the recess, the device may be assembled by heating the recess and inserting the protrusion into the recess while the recess is expanded. The improved system can be accurately assembled, with the ring members located very close to each other. The system has improved oil retention and water exclusion properties.

US Patent No. 4,114,902 discloses sealing rings having two complementary parts. The sealing rings are used on the shafts of rotating elements. The first ring has an annular face with a'recess therein and adapted and constructed to mate with an axially extending flange which extends from the annular face of the second ring. The flange has grooves on the radially outwardly facing surface. The inwardly facing wall of the recess also possesses grooves. Additionally there is a communicating orifice through the first ring to communicate with the recess. The various grooves are designed to accumulate foreign particles that may be incursive with respect to the journally means of a driving or driven device. These foreign particles are then expelled through the aforementioned orifice due to centrifugal forces while the device is being employed.

### SUMMARY OF THE INVENTION

According to a first aspect of the invention there is provided a seal device as claimed in Claim 1.

An object of the invention is to provide a unitized two piece labyrinth seal. Forming the seal of only two pieces is advantageous. A two piece seal may have fewer leakage paths than a three piece seal. Moreover, a two piece seal may be more economical to manufacture and more reliable.

Another object of the present invention is to provide a seal device that can be accurately assembled, with very little play.

Another object of the invention is to provide a high performance seal device that can be produced economically.

Yet another, object of the invention is to provide a seal device that is especially well adapted for use in a grease environment.

Other advantages of the present invention will become apparent from the following description and drawings which illustrate preferred embodiments of the present invention.

### BRIEF DESCRIPTION OF THE DRAWINGS

FIG. 1 is a front elevational view of a known seal device.
FIG. 2 is a partial cross sectional side view of the seal device of FIG. 1, taken along line 2-2 of FIG. 1.
FIG. 3 is a partial cross sectional side view like FIG. 2, but showing the seal device employed within a sealed system.
FIG. 4 is a rear elevational view of the stator member for the seal device of FIG. 1.
FIG. 5 is a bottom view of the seal device of FIG. 1.
FIG. 6 is an enlarged view of the interface shown in circle 6 of FIG. 2.
FIG. 7 is an enlarged view of the connecting portions shown in circle 7 of FIG. 2.
FIG. 8 is a partial cross sectional view of another known seal device.
FIG. 9 is a partial cross sectional view of a preferred embodirpent of a seal device constructed in accordance with the present invention.

### DETAILED DESCRIPTION OF PREFERRED EMBODIMENTS

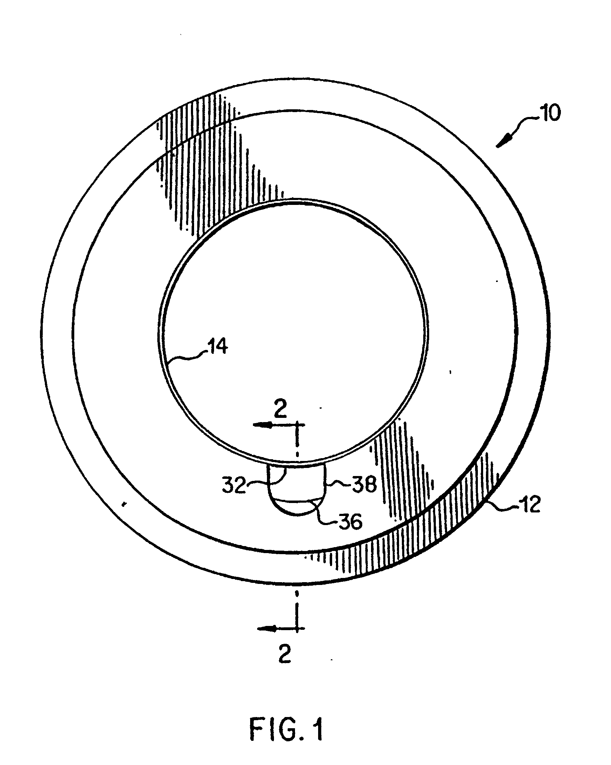

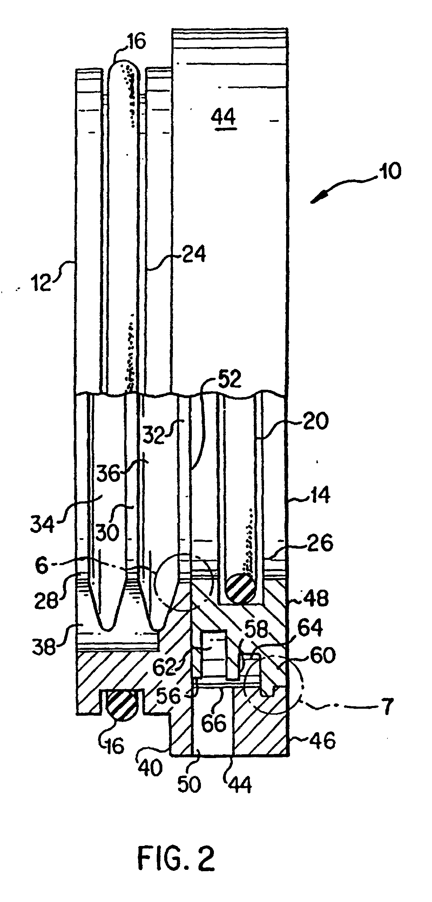

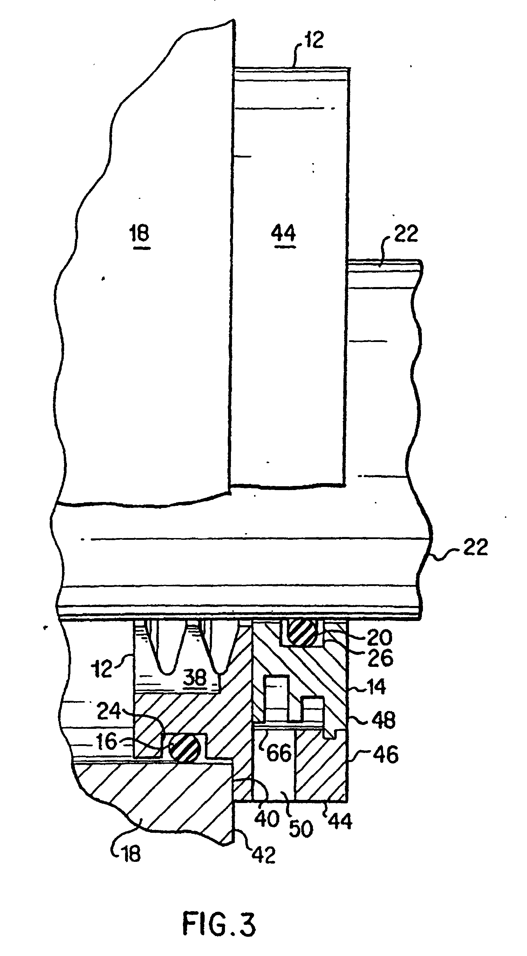

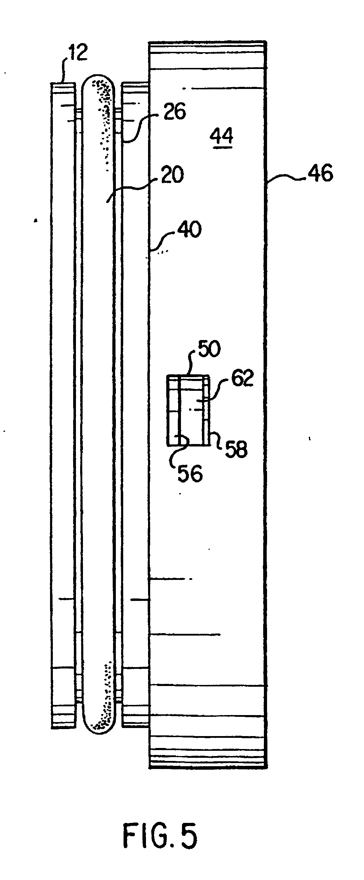

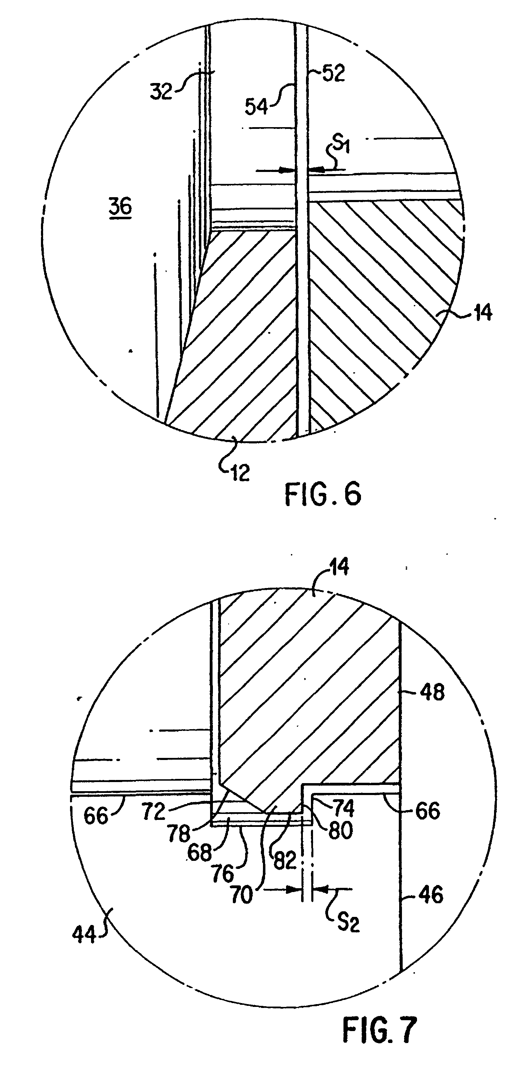

Referring now to the drawings, wherein like reference numerals indicate like elements, there is shown in FIGS. 1-7 a known ring-shaped seal device 10. The seal device 10 includes a stator member 12 and a rotor member 14 (FIG. 2). An O-ring 16 is provided between the stator member 12 and a housing 18 (FIG. 3), and an O-ring 20 is provided between the rotor member 14 and a shaft 22. The ring-shaped stator and rotor members 12, 14 may be made of a suitable metal. The stator and rotor members 12, 14 may be made of polytetrafluoroethylene (PTFE) or PTFE alloy. The O-rings 16, 20 may be made of a suitable elastomeric material.

The stator O-ring 16 provides a tight seal between the stator member 12 and the housing 18. Moreover, the radial compression of the O-ring 16 between the stator member 12 and the housing 18 is sufficient to prevent the stator member 12 from rotating with respect to the housing 18. The rotor O-ring 20 provides a tight seal between the rotor member 14 and the shaft 22, and the compression of the O-ring 20 between the rotor member 14 and the shaft 22 is sufficient to make the rotor member 14 rotate in unison with the shaft 22.

In operation, the stator O-ring 16 prevents oil from escaping out of the housing 18 around the outside of the stator member 12, and the rotor O-ring 20 prevents contaminants from traveling into the housing 18 along the surface of the shaft 22. Oil and contaminants are dynamically prevented from traveling in a radial direction through the interface between the two ring-shaped members 12, 14 as explained in more detail below.

Since the stator member 12 does not rotate with respect to the housing 18, the stator O-ring 16 is not subjected to friction. Therefore, the stator O-ring 16 has a long useful life. Similarly, since the rotor member 14 does not rotate with respect to the shaft 22, the rotor O-ring 20 is not subjected to friction and has a long useful life.

The stator O-ring 16 is located within an annular recess 24. As illustrated in FIG. 3, the recess 24 has a rectangular cross section. The rotor O-ring 20 is also located within a rectangular cross sectioned annular recess 26. The purpose of the recesses 24, 26 is to ensure that the O-rings 16, 20 are located in their proper positions when the seal device 10 is installed within the housing 18 to provide a seal around the shaft 22.

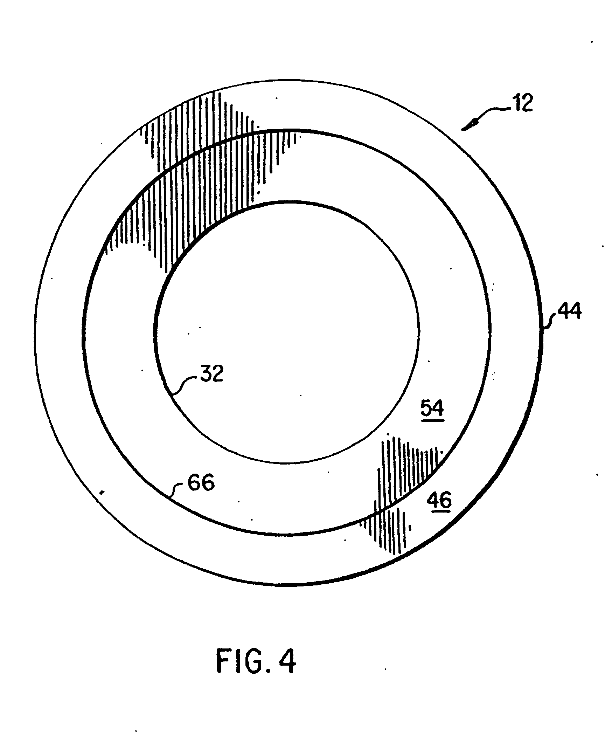

For clarity of illustration, the O-rings 16, 20 are not shown in FIGS. 1 and 4.

Referring to FIG. 2, the stator member 12 has a series of alternating annular ridges 28, 30, 32 and annular grooves 34, 36. The grooves 34, 36 are located between the ridges 28, 30, 32. An axial groove 38 is provided at the bottom of the seal device 10 to connect the grooves 34, 36 to the interior of the housing 18.

In operation, lubricating oil traveling outwardly along the surface of the shaft 22 past the first ridge 28 is rotated by the rotating shaft 22 and thrown by centrifugal force into the first annular groove 34. The oil then falls by gravity into the axial groove 38 and is thereby directed back into the housing 18. Oil that makes its way past the first groove 34 and past the second ridge 30 is thrown by centrifugal force into the second groove 3∈ and then drained by gravity into the axial groove 38 to be directed back into the housing 18. Thus, the stator member 12 and the rotating shaft 22 work together dynamically to prevent oil from escaping out of the housing 18. Essentially no oil escapes outwardly past the second groove 36 and the third ridge 32. Two grooves are shown, but one groove may be sufficient, and more than two may be used.

The stator member 12 has an inwardly directed shoulder face 40 for contacting an outer wall 42 of the housing 18 (FIG. 3). The shoulder face 40 is used during assembly to properly locate the stator member 12 with respect to the housing 18. That is, the stator member 12 may be simply pushed into the housing 18 until the shoulder face 40 abuts against the housing wall 42. The shoulder face 40 prevents the stator member 12 from moving too far into the housing 18. The shoulder face 40 may be omitted in an alternative device. Space limitations may prevent the use of the shoulder face 40.

The stator member 12 also has a ring-shaped cover 44. The cover 44 extends axially outwardly from the shoulder face 40. The cover 44 at least partially surrounds the outside diameter of the rotor member 14. The cover 44 has an outwardly directed end face 46 that is coplanar with an outwardly directed end face 48 of the rotor member 14. The cover 44 has a radial slot-shaped opening 50. The opening 50 is located at the bottom of the seal device 10 (like the axial drain groove 38 of the stator member 12). The cover opening 50 is used to direct contaminants out of the seal device 10.

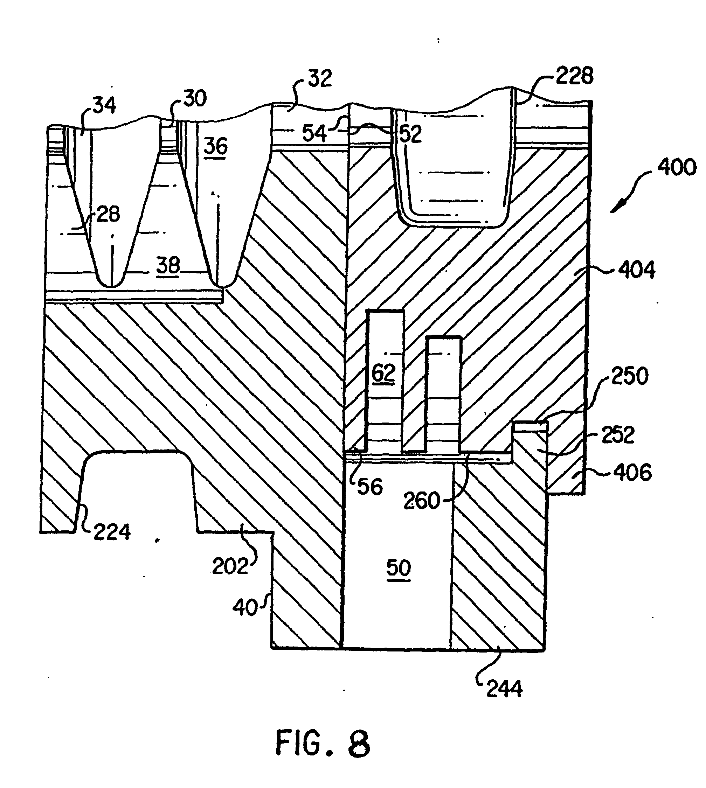

Another known seal device 400 is illustrated in FIG. 8. The rotor member 404 for the seal device 400 has a cover flange 406 with an outer diameter that is greater than the outer diameter of the outer rotor member surface 260. The cover flange 406 helps prevent material from moving into the space between the cover 244 and the outer rotor member surface 260. For clarity of illustration, the O-rings 16, 20 are not illustrated in FIG. 8. In operation, the O-rings 16, 20 would be located in the respective recesses 224, 228.

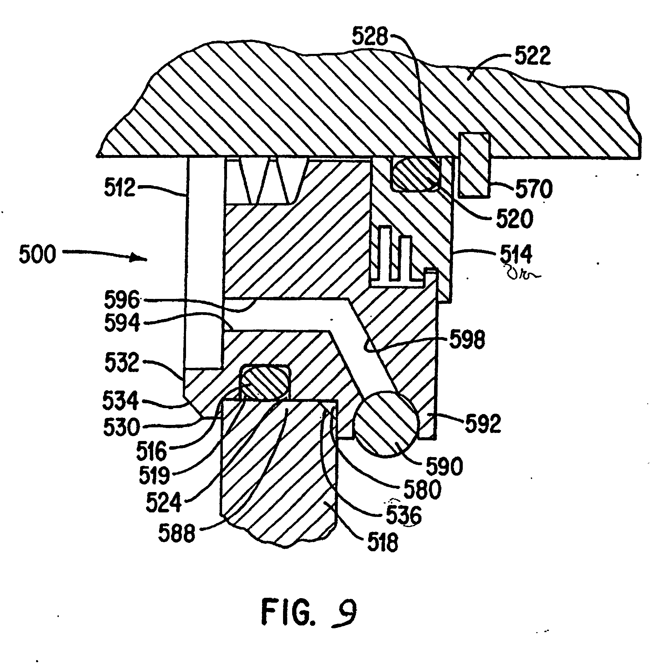

A seal device 500 constructed in accordance with the present invention is illustrated in FIG. 9. The seal device 500 includes a stator member 512 and a rotor member 514. In an assembled condition, an O-ring 516 is provided between the stator member 512 and the housing 518, and an O-ring 520 is provided between the rotor member 514 and the shaft 522. The O-rings 516 and 520 are located within the recesses 524 and 528, respectively, similarly to the device illustrated in FIG. 8. The ring shaped stator and rotor members 512 and 514 may be formed of the same materials as in the embodiments described above. The overall sealing operation of the seal device 500 is similar to the operation of the device illustrated in FIG. 8.

The seal device 500 illustrated in FIG. 9 is particularly well suited for use in a grease application where the grease is under pressure and subject to being forced out of the housing 518 from left to right as shown in FIG. 9.

To help overcome the problem of the seal device 500 being forced by the pressure to be dislodged from its position between the housing 518 and the shaft 522, a deflectable step 530 is provided at an inner side 532 of the stator 512. To install the seal device 500, the outer diameter of the step 530 of the stator member 512 is temporarily reduced to fit through the inner diameter of the bore 519 of the housing 518. A chamfer 534 is provided on the step 530 and a chamfer 536 is provided on the bore 519 to facilitate insertion of the stator member 512. Upon insertion, the stator member 512 snaps outwardly such that the wall of the housing 518 is positively held in the recess 588 formed between the check valve seat 592 and the step 530.

In the illustrated embodiment, a snap ring 570 is attached to the shaft 522 and positioned outside of the rotor member 514 to support the rotor member 514 against pressure from inside of the housing 518.

Another feature of the seal device 500 is that a passageway 594 is provided through the stator member 512. Grease may flow under pressure through the passageway 594, for example during purging. It is common practice to purge systems like the system shown in FIG. 9 until grease is seen flowing out of the system where a seal is required. The grease will act as a plug to keep water and dirt out.

The opening of the passageway 594 is covered by an O-ring 590 (or by another elastic member or garter spring) positioned in the check valve seat 592. The O-ring 590 is sized and composed of a suitable material to be forced outwardly by the pressure of the grease, deforming the O-ring 590 and/or seat 592 and allowing the grease to escape. After the grease is vented through the stator member 512, the O-ring 590 returns to the illustrated position to cover the opening of passageway 594 and prevent water, dirt and/or other contaminants from entering into the housing through the passageway 594.

The passageway 594 is angled downwardly through outer passageway portion 598 as it extends from inner passageway portion 596 toward the relief valve seat 592 making it even less likely that water will ever run in through the passageway 594 into the housing.

In an alternative embodiment, there may be multiple passageways each constructed similarly to the passageway 594 illustrated in Fig. 9.

## Claims

1. A seal arrangement comprising:
a housing having a radially extending wall (518) and an axially extending opening therethrough, a seal device being positioned within the opening and further comprising :
a first ring member (512) having a first connecting portion comprising an annular tooth (252);
a second ring member (514) having a second connecting portion comprising an annular notch (250) for receiving the annular tooth of said first connecting portion, the second connecting portion being located radially inside of the first connecting portion,
**characterised in that** said second ring member (514) has a radially outwardly extending and deflectable step portion (530) which upon axial insertion of the seal device into the said opening is first deflected and then snaps back outwardly so as to hold the second ring member against said wall for suppressing said seal device from being dislodged from the housing.

2. The device of Claim 1, further comprising a passageway for permitting grease to flow through said seal device.

3. The device of Claim 2, further comprising a displaceable cover covering said passageway.

4. The device of Claim 1 wherein said seal device is a unitized two piece labyrinth seal device having a passageway for permitting grease to flow therethrough.

## Patentansprüche

1. Dichtungsanordnung mit:
einem Gehäuse, das eine sich radial erstreckende Wand (518) und eine sich axial hier hindurch erstreckende Öffnung ausweist, wobei eine Dichtungseinrichtung innerhalb der Öffnung angeordnet ist,
und weiterhin mit:
einem ersten Ringelement (512), das einen ersten Verbindungsbereich mit einem ringförmigen Zahn (252) aufweist;
einem zweiten Ringelement (514), das einen zweiten Verbindungsbereich mit einer ringförmigen Nut (250) zum Aufnehmen des ringförmigen Zahns des ersten Verbindungsbereichs aufweist, wobei der zweite Verbindungsbereich radial innerhalb des ersten Verbindungsbereichs angeordnet ist,
**dadurch gekennzeichnet, dass** das zweite Ringelement (514) einen sich radial auswärts erstreckenden und auslenkbaren Stufenbereich (530) aufweist, der beim axialen Einsetzen der Dichtungseinrichtung in die Öffnung zuerst abgelenkt wird und dann nach außen zurückspringt, um so das zweite Ringelement an der Wand zu halten, um zu verhindern, dass die Dichtungseinrichtung aus dem Gehäuse herausgelöst wird.

2. Vorrichtung nach Anspruch 1, die weiterhin eine Passage aufweist, die es Schmiermittel erlaubt, durch die Dichtungseinrichtung zu fließen.

3. Vorrichtung nach Anspruch 2, die weiterhin eine entfernbare Abdeckung aufweist, um die Passage abzudecken.

4. Vorrichtung nach Anspruch 1, wobei die Dichtungseinrichtung als zweistückige Labyrinthdichtungseinrichtung zusammengefasst ist, die eine Passage aufweist, um es Schmiermittel zu erlauben, dort hindurchzufließen.

## Revendications

1. Agencement d'étanchéité comprenant :
un boîtier ayant une paroi s'étendant radialement (518) et une ouverture s'étendant axialement à travers, un dispositif d'étanchéité étant positionné à l'intérieur de l'ouverture et comprenant en outre :
un premier élément annulaire (512) ayant une première portion de raccord comprenant une dent annulaire (252) ;
un deuxième élément annulaire (514) ayant une deuxième portion de raccord comprenant une encoche annulaire (250) pour loger la dent annulaire de ladite première portion de raccord, la deuxième portion de raccord étant située radialement à l'intérieur de la première portion de raccord,
**caractérisé en ce que** ledit deuxième élément annulaire (514) a une portion étagée s'étendant vers l'extérieur radialement et pouvant être défléchie (530) qui lors de l'insertion axiale du dispositif d'étanchéité dans ladite ouverture est d'abord défléchie et ensuite se ré-enclenche vers l'extérieur de manière à maintenir le deuxième élément annulaire contre ladite paroi pour empêcher ledit dispositif d'étanchéité d'être délogé du boîtier.

2. Dispositif selon la revendication 1, comprenant un passage pour permettre à la graisse de s'écouler à travers ledit dispositif d'étanchéité.

3. Dispositif selon la revendication 2, comprenant en outre un couvercle déplaçable couvrant ledit passage.

4. Dispositif selon la revendication 1, dans lequel ledit dispositif d'étanchéité est un dispositif d'étanchéité à labyrinthe à deux parties unifié ayant un passage pour permettre à la graisse de s'écouler à travers.
